Europäisches Patentamt

European Patent Office

Office européen des brevets

(11) Publication number: **0 096 528**

A2

# EUROPEAN PATENT APPLICATION

(21) Application number: 83303124.8

(22) Date of filing: 01.06.83

(51) Int. Cl.³: **B 29 C 1/00**
**B 29 C 3/00**

(30) Priority: 05.06.82 GB 8216447

(43) Date of publication of application:
21.12.83 Bulletin 83.51

(84) Designated Contracting States:
AT BE CH DE FR GB IT LI LU NL SE

(71) Applicant: WARD & GOLDSTONE p.l.c.
Frederick Road
Salford, M6 6AP(GB)

(72) Inventor: Gerrard, Kevin Edwin
6 Hillside Avenue
Walkden Worsley Greater Manchester(GB)

(72) Inventor: Morrissy, Francis
31 Winster Avenue
Salford 7 Greater Manchester(GB)

(74) Representative: Downey, William Gerrard et al,
WILSON, GUNN, ELLIS & CO. 41 Royal Exchange Cross
Street
Manchester M2 7BD(GB)

(54) Apparatus for and method of preheating moulding material.

(57) A compression moulding machine comprises a series of moulds 1 fed with moulding material from a hopper 11. Preheating chambers 8, 9 and 10 corresponding to the moulds are disposed between the hopper and the moulds into which moulding material from the hopper may be fed. Material so fed is heated in the chambers 8, 9 and 10 by heaters 23 before being discharged into the moulds 1. This shortens the curing time of material in the mould, thus increasing the efficiency of the moulding process, without increasing the risk of damage to moulds or hopper due to preheating of the material in the hopper.

FIG 1

-1-

## APPARATUS FOR AND METHOD OF

## PREHEATING MOULDING MATERIAL

The present invention relates to apparatus for and a method of preheating moulding material.

In a compression moulding process, the mould is charged with moulding material which is then subjected to heat and pressure in the mould until it is cured. The complete moulded article is then ejected from the mould. Curing time in the mould, and therefore moulding time, can be shortened and the efficiency of the moulding process made more efficient by preheating and moulding material before it is fed to the mould. Presently known apparatus for achieving this is complicated and expensive. In one such known process material sufficient to charge the mould several times is heated in a preheating chamber. It is then fed to a transfer chamber by means of which it may be fed to the mould. A problem with this method is that, if a satisfactory preheating time and temperature is set for the moulding material fed to the mould in the first charge, this time, and possibly also the temperature, will have been exceeded by the time the material is fed to the mould in the second and subsequent charges. As a result material may begin to cure or be cured in the preheating chamber. This in turn may increase the difficulty of discharging material from the preheating chamber and/or increase the linkelihood that cured material will be subject to moulding pressure in this mould. As moulding material cures its ability to flow progressively decreases. If the material will not flow when first subjected to the moulding pressure, the mould will be subjected to unacceptable forces and may be damaged.

According to one aspect of the present invention there is provided apparatus for preheating moulding material for use in a moulding process comprising a preheating chamber, means for feeding moulding material to the preheating chamber, means for heating the material in the preheating chamber and means for discharging the contents of the preheating chamber into a moul

According to another aspect of the present invention there is provided a method of preheating moulding material for use in a moulding process including the steps of feeding moulding material to a preheating chamber, heating the moulding material in the chamber and discharging the preheated material from the chamber into a mould.

A preferred embodiment of the invention may comprise any one or more of the following advantageous features:-

(a)   The preheating chamber is defined by a plate arrangement comprising two superposed plates and the lower plate is a shutter plate.

(b)   The lower plate of the arrangement provides the base and the upper plate the walls of the chamber,

(c)   The means for feeding moulding material to the preheating chamber comprises a hopper having an outlet in its base directly above the plate arrangement,

(d)   The means for heating the material comprises an electrical heater,

(e)   The electrical heater of (d) is ceramic,

(f)   The means for discharging the contents comprises means for advancing the preheating chamber to a position above the mould,

(g) The means for advancing comprises a pressure fluid operable piston and cylinder device,

(h) The piston and cylinder device is hydraulic or pneumatic,

(i) The preheating chamber is supported on slides,

(j) A temperature control circuit is associated with the means for heating,

(k) The circuit of (j) comprises a thermocouple disposed on the heater itself,

(l) The circuit of (j) comprises a thermocouple disposed in the outlet from the hopper,

(m) The means for discharging comprises a cooperative actuator and stop which are operative to actuate the lower shutter plate of (b) to enable the material in the preheater chamber to be discharged into a mould.

(n)  Heaters are provided in the hopper.

In order that the invention may be more clearly understood, one embodiment thereof will now be described, by way of example, with reference to the accompanying drawings, in which:-

Figure 1 diagrammatically shows a sectional plan view through a moulding machine, and

Figure 2 is a diagrammatic side elevational view in section of the machine of Figure 1.

Referring to the drawing, the moulding section of the machine is conventional and comprises a plurality of individual moulds 1 set in a table 2.  A moulding press head 3, for subjecting the material in the moulds 1 to heat and pressure, is mounted above the table 2 for movement towards

and away from the table 2 and means (indicated diagrammatically at 4) are provided for ejecting completed moulded products from the mould in the usual way.

The preheater section of the machine is indicated generally by the reference numberal 5. This section 5 comprises a plate arrangement comprising two metal plates 6 and 7 which together define three preheating chambers 8, 9 and 10 at substantially the same relative spacing as the moulds 1. The plate 6 effectively provides the walls of the preheating chambers 8, 9 and 10 and the plate 7 the bases. Above the plate arrangement is disposed an open topped hopper 11 for feeding powdered or grannular raw moulding material to the preheating chambers 8, 9 and 10. The hopper 11 has an outlet 12 at its base which is directly adjacent the upper surface of the plate 6. A felt sealing strip 13 is disposed around the edge of the outlet.

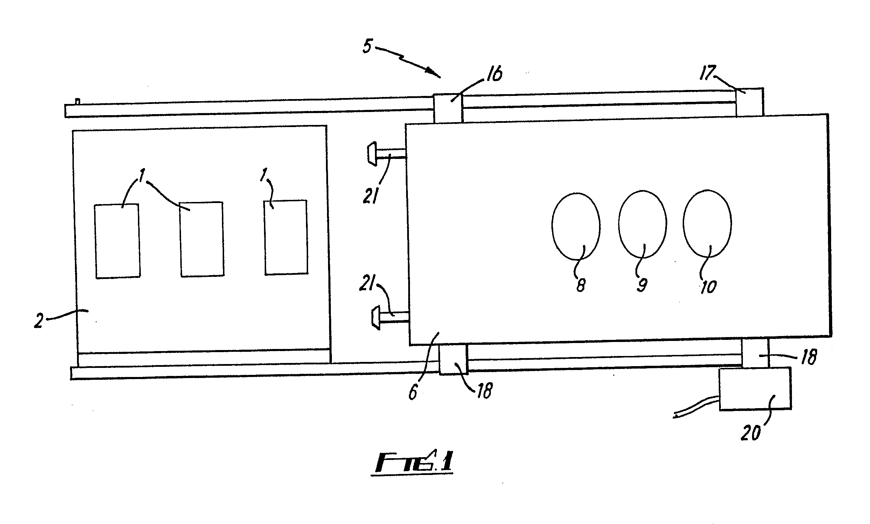

The plate arrangement is mounted for reciprocating movement between the position shown in Figure 1 and a position in which the preheating chambers 8, 9 and 10 are disposed above respective moulds 1. For this purpose slides 14 and 15 are disposed on opposite sides respectively of the plate arrangement and the moulding section and the plate arrangement is slidably supported on these slides by means of supports 16 to 19. A pressure fluid operable piston and cylinder device 20 is provided from driving the arrangement into and out of the moulding section. The device 20, which is only diagrammatically indicated, may be hydraulic or pneumatic. The plate 7 comprises a plate within a plate to provide a shutter. The outer plate has apertures normally aligned with the apertures in plate 6 defining the walls of chambers 8, 9 and 10. The inner plate has apertures normally disaligned with the apertures in the outer plate but brought into alignment by actuation of actuators 21 to allow material in chambers 8, 9 and 10 to be discharged downwardly from the chambers. These actuators 21 are provided on the front edge of the plate 7 and cooperating stops 22 are provided in the moulding section. It will of course be appreciated that although three mould 1 and corresponding preheating/loading chambers have been described any number from one upwards may be provided.

A bank of heaters 23 is disposed to one side of the outlet 12 of the hopper 11. There are three heaters in the bank corresponding respectively to the chambers 8, 9 and 10. Each heater is of the ceramic type and has a nominal value of 500W. Voltage regulators are provided in the heater circuit for controlling the power supplied.

A cycle in the operation of the apparatus will now be described beginning with a moulding step being carried out in the moulding section and a preheating step in the preheating section. At this point, the moulding head 3 has been brought down on moulding material previously supplied to the moulds 1 and the material is being subjected to heat and pressure to cure it to produce the finished product. The preheating chambers 8, 9 and 10 have previously been filled with moulding material from hopper 11 and this material is simultaneously subjected to heat from the bank of heaters 23. The positioning of the bank 23 is such that respective heaters (referenced 23a, 23b and 23c) are disposed directly above the chambers 8, 9 and 10. The material is heated up to a temperature of about 80°C and heat output is controlled by means of a temperature control circuit
24 which comprises a monitoring thermocouple 25
disposed on the central heater 23b.  This
control ciruit also comprises a further thermocouple 26 disposed in the region of the outlet
12 of the hopper 11 to monitor the temperature
of the moulding material at that point.  A
preferred moulding material is urea formaldehyde, but any other suitable compression moulding
material may equally well be used.

After heating the material in the chambers
8, 9 and 10 and ejecting the completed moulded
products from the moulds 1, the plate arrange-
ment is moved into the moulding section.  As
the arrangement moves in, actuation of the actuators 21 on the stops 22 actuates the shutter
plate 7 allowing the preheated material from the
chambers 8, 9 and 10 to be discharged into respective moulds 1.  The arrangement is then withdrawn and as withdrawal takes place the plates 6
and 7 are realigned thus restoring the bases of
the chambers 8, 9 and 10.  The reconstituted chambers
8, 9 and 10 pass under the outlet 12 of the hopper 11 and the chambers are recharged with fresh moulding material from the hopper, the material being levelled off in the chambers by the seal 6 as it passes over them. The remainder of the withdrawal stroke realigns the now charged chambers with respective heaters and the cycle begins again.

With the above described apparatus and method, only the material actually needed by the next immediate moulding step is heated and heating is controlled by means of the control circuit 24. The danger of overheating and possible premature curing and the associated disadvantages are therefore substantially reduced. The arrangement is easy and inexpensive to construct and operate.

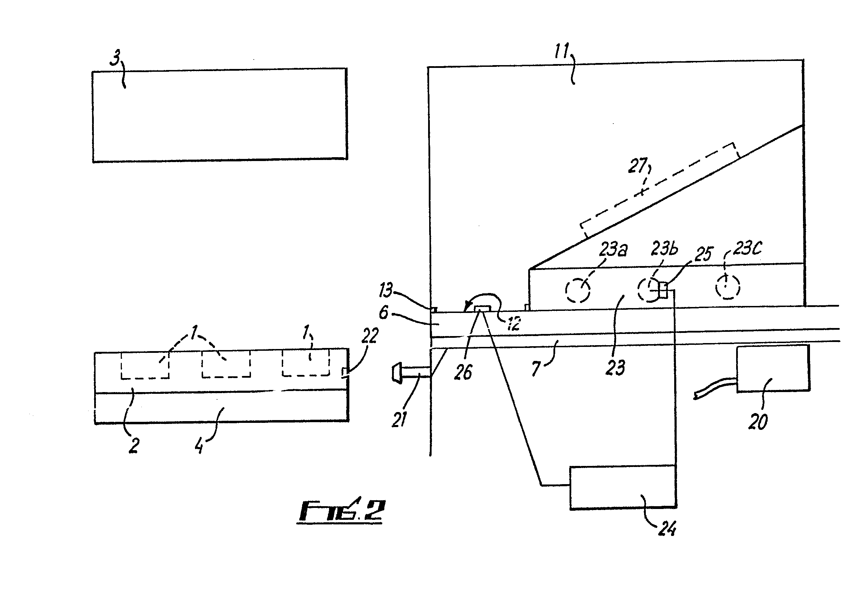

It will be appreciated that the above embodiment has been described by way of example only and that many variations are possible without departing from the scope of the invention. For example, types of heater other than electrical may be used and other methods of temperature control and means for advancing and retracting the plates may be employed.  If desired, heaters may also be provided in the hopper as shown in dashed outline 27 in Figure 2.  The heat provided by such heaters should not be sufficient to cure the moulding material in the hopper.

CLAIMS

1. Apparatus for preheating moulding material for use in a moulding process characterised by a preheating chamber (8), means (1) for feeding moulding material to the preheating chamber (8), means (23) for heating the material in the preheating chamber (8) and means (7, 21) for discharging the contents of the preheating chamber into a mould.

2. Apparatus as claimed in claim 1, in which the preheating chamber (8) is defined by a plate arrangement comprising two superposed plates (6, 7) and the lower plate (7) is a shutter plate.

3. Apparatus as claimed in claim 2, in which the lower plate (7) of the arrangement provides the base and the upper plate (6) the walls of the chamber (8).

4. Apparatus as claimed in claims 2 and 3, in which the means (11) for feeding moulding material to the preheating chamber (8) comprises a hopper (11) having an outlet (12) in its base directly above the plate arrangement.

5. Apparatus as claimed in any preceding claim, in which the means (23) for heating the material comprises an electrical heater.

6. Apparatus as claimed in Claim 5, in which the electrical heater (23) is ceramic.

7. Apparatus as claimed in any preceding claim, in which the means (7, 21) for discharging the contents comprises means for advancing the preheating chamber (8) to a position above the mould (1).

8. Apparatus as claimed in Claim 7, in which the means for advancing comprises a pressure fluid operable piston and cylinder device (20).

9. Apparatus as claimed in Claim 8, in which the piston and cylinder device (20) is hydraulic or pneumatic.

10. Apparatus as claimed in any preceding claim, in which the preheating chamber (8) is supported on slides (14, 15).

11. Apparatus as claimed in any preceding claim, in which a temperature control circuit (24) is associated with the means (23) for heating.

12. Apparatus as claimed in claim 11, in which the control circuit (24) comprises a thermocouple (25) disposed on the heater (23) itself.

13. Apparatus as claimed in claim 11 or 12, in which the circuit (24) comprises a thermocouple (26) disposed in the outlet (12) from the hopper (11).

14. Apparatus as claimed in claim 2, or in any claim appendant to claim 2, in which the means (7, 21) for discharging comprises a cooperative actuator (21) and stop (22) which are operative to actuate the lower shutter plate (7) to enable the material in the preheater chamber (8) to be discharged into a mould (1).

15. Apparatus as claimed in any preceding claim, in which heaters are provided in the hopper.

16. A method of preheating moulding material for use in a moulding process characterised by the steps of feeding moulding material to a preheating chamber (8), heating the moulding material in the chamber(8) and discharging the preheated material from the chamber (8) into a mould (1).

1/2

FIG.1

FIG.2